(19)

**Europäisches Patentamt**
**European Patent Office**
**Office européen des brevets**

(11) **EP 4 485 407 A1**

(12) **EUROPEAN PATENT APPLICATION**
published in accordance with Art. 153(4) EPC

(43) Date of publication:
**01.01.2025  Bulletin 2025/01**

(21) Application number: **22928577.0**

(22) Date of filing: **22.02.2022**

(51) International Patent Classification (IPC):
*G07D 7/00* (2016.01)    *G07D 7/12* (2016.01)
*G07D 7/164* (2016.01)    *G07D 7/183* (2016.01)
*G07D 7/185* (2016.01)    *G07D 7/187* (2016.01)
*G07D 7/189* (2016.01)

(52) Cooperative Patent Classification (CPC):
**G07D 7/00; G07D 7/12; G07D 7/164; G07D 7/183;
G07D 7/185; G07D 7/187; G07D 7/189**

(86) International application number:
**PCT/JP2022/007415**

(87) International publication number:
**WO 2023/162046 (31.08.2023 Gazette 2023/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Fujitsu Frontech Limited
Inagi-shi, Tokyo 206-8555 (JP)**

(72) Inventors:
• **YOSHIMATSU, Yoshitaku
  Inagi-shi, Tokyo 206-8555 (JP)**
• **YOSHIMURA, Kazuhisa
  Inagi-shi, Tokyo 206-8555 (JP)**
• **NAKANO, Hiroshi
  Inagi-shi, Tokyo 206-8555 (JP)**

(74) Representative: **Haseltine Lake Kempner LLP
Bürkleinstrasse 10
80538 München (DE)**

(54) **BANKNOTE-IMAGE-PROCESSING DEVICE AND BANKNOTE-IMAGE-PROCESSING METHOD**

(57)    In a banknote image processing device (10), a storage unit (12) stores an image of a normal banknote therein, and a processor (11) performs pseudo-damage processing that imitates damage caused on the normal banknote, on the image of the normal banknote. For example, the processor (11) performs hole processing, cutting processing, tearing processing, corner folding processing, staining processing, or washing processing on the image of the normal banknote as the pseudo-damage processing.

**FIG.1**

EP 4 485 407 A1

**Description**

Technical Field

The present disclosure relates to a banknote image processing device and a banknote image processing method.

Background Art

Development of banknote identification algorithms and banknote identification systems using images of banknotes needs, in addition to images of normal banknotes, a large number of images of abnormal banknotes with damages (hereinafter also referred to as "damaged banknote images"), such as a banknote with a hole, a partially cut banknote, a torn banknote, a folded banknote, a stained banknote, and a washed banknote.

Citation List

Patent Literature

Patent Literature 1: Japanese Patent Application Laid-open No. 2011-258029

Summary of invention

Technical Problem

However, obtaining a large number of damaged banknote images by actually damaging the real banknotes would need a great deal of workloads to perform damage processing on the real banknotes.
In view of this, the present disclosure proposes a technique to easily obtain a large number of damaged banknote images.

Solution to Problem

A banknote image processing device of the present disclosure includes a storage unit and a processor. The storage unit stores an image of a normal banknote therein. The processor performs pseudo-damage processing that imitates damage caused on the normal banknote, on the image.

Advantageous Effects of Invention

According to the art disclosed herein, a large number of damaged banknote images can be obtained easily.

Brief Description of Drawings

FIG. 1 is a diagram illustrating a structure example of a banknote image processing system in Example 1 according to the present disclosure.
FIG. 2 is a diagram illustrating one example of a captured image in Example 1 according to the present disclosure.
FIG. 3 is a diagram illustrating one example of normalized projection in Example 1 according to the present disclosure.
FIG. 4 is a diagram illustrating one example of hole processing in Example 1 according to the present disclosure.
FIG. 5 is a diagram illustrating one example of the hole processing in Example 1 according to the present disclosure.
FIG. 6 is a diagram illustrating one example of cutting processing in Example 1 according to the present disclosure.
FIG. 7 is a diagram illustrating one example of the cutting processing in Example 1 according to the present disclosure.
FIG. 8 is a diagram illustrating one example of tearing processing in Example 1 according to the present disclosure.
FIG. 9 is a diagram illustrating one example of the tearing processing in Example 1 according to the present disclosure.
FIG. 10 is a diagram illustrating one example of corner folding processing in Example 1 according to the present disclosure.
FIG. 11 is a diagram illustrating one example of the corner folding processing in Example 1 according to the present disclosure.
FIG. 12 is a diagram illustrating one example of staining processing in Example 1 according to the present disclosure.

FIG. 13 is a diagram illustrating one example of the staining processing in Example 1 according to the present disclosure.

FIG. 14 is a diagram illustrating one example of thickness data in Example 2 according to the present disclosure.

FIG. 15 is a diagram illustrating one example of the thickness data in Example 2 according to the present disclosure.

Embodiments for Carrying Out the Invention

Examples of the present disclosure will be described below based on the drawings. In Examples below, the same structures are denoted with the same reference sign.

Example 1

<Structure of banknote image processing system>

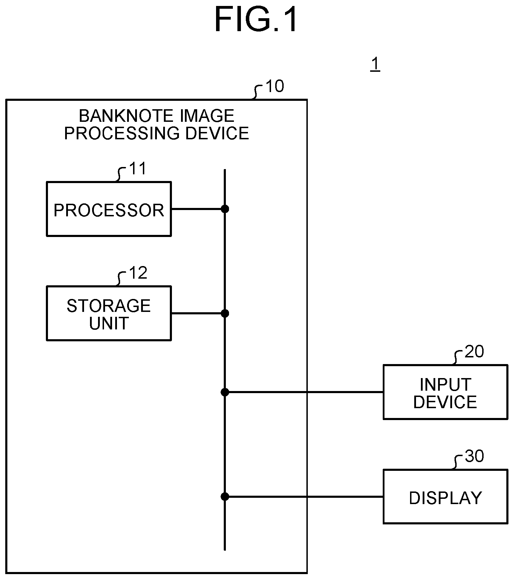

FIG. 1 is a diagram illustrating a structure example of a banknote image processing system in Example 1 according to the present disclosure.

In FIG. 1, a banknote image processing system 1 includes a banknote image processing device 10, an input device 20, and a display 30. The input device 20 and the display 30 are connected to the banknote image processing device 10. Examples of the input device 20 include a pointing device such as a mouse, and a keyboard. Examples of the display 30 include a liquid crystal display (LCD).

The banknote image processing device 10 includes a processor 11 and a storage unit 12. Examples of the processor 11 include a central processing unit (CPU), a digital signal processor (DSP), a field programmable gate array (FPGA), and an application specific integrated circuit (ASIC). Examples of the storage unit 12 include a memory and a storage. The banknote image processing device 10 is realized by, for example, a computer.

The storage unit 12 stores therein in advance images that are captured by a camera (hereinafter also referred to as "captured images"), including images of normal banknotes that have no damage (hereinafter also referred to as "normal banknote images"). The captured images include an image of an obverse side of a normal banknote (hereinafter also referred to as "obverse image") and an image of a reverse side of the normal banknote (hereinafter also referred to as "reverse image").

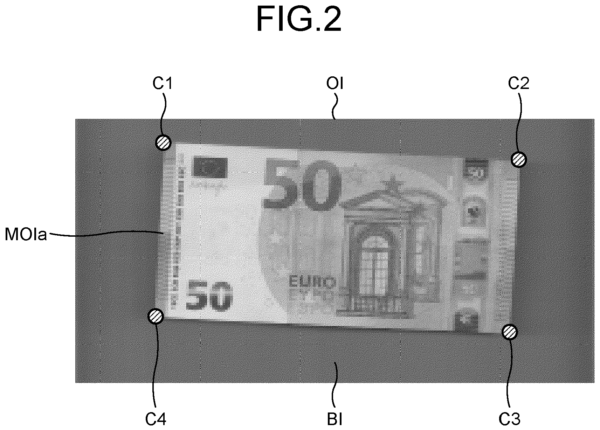

FIG. 2 is a diagram illustrating one example of the captured image in Example 1 according to the present disclosure. In FIG. 2, a captured image OI is formed from a normal banknote image MOIa and an image of the background of the normal banknote (hereinafter also referred to as "background image") BI. The normal banknote image MOIa is a rectangular image, with corner points C1, C2, C3, and C4 corresponding to four vertices of the rectangle.

The processor 11 acquires the captured image OI from the storage unit 12 and performs pseudo damage processing (hereinafter also referred to as "pseudo-damage processing"), which imitates damages to be caused on the normal banknotes, on the normal banknote image MOIa included in the acquired captured image OI, thereby generating a damaged banknote image. In the following description, the image formed from the damaged banknote image and the background image BI, i.e., the image obtained by performing the pseudo-damage processing on the normal banknote image MOIa is called "processed image" in some cases.

<Pre-treatment and post-treatment of pseudo-damage processing>

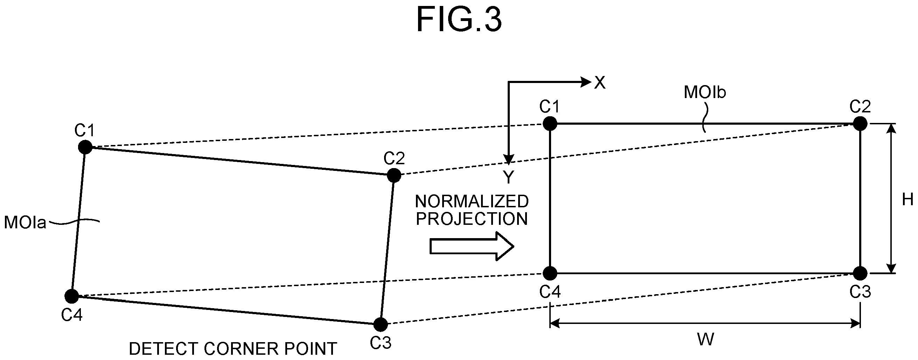

The processor 11 performs normalized projection on the normal banknote image MOIa before performing the pseudo-damage processing on the normal banknote image MOIa. FIG. 3 is a diagram illustrating one example of the normalized projection in Example 1 according to the present disclosure. As illustrated in FIG. 3, the processor 11 detects the four corner points C1 to C4 of the normal banknote image MOIa and performs the normalized projection on the basis of the detected corner points C1 to C4. In the following description, the image after the normalized projection is referred to as "normalized image" in some cases. In FIG. 3, the width of a normalized image MOIb is expressed as "W" and the height of the normalized image MOIb is expressed as "H". When any pseudo-damage processing described below is performed on the normal banknote image MOIa, the processor 11 also performs the normalized projection as a pre-treatment of the pseudo-damage processing and performs back projection of the normalized projection as a post-treatment of the pseudo-damage processing. Each of hole processing, cutting processing, tearing processing, corner folding processing, staining processing, and washing processing will be described below as examples of the pseudo-damage processing.

<Hole processing>

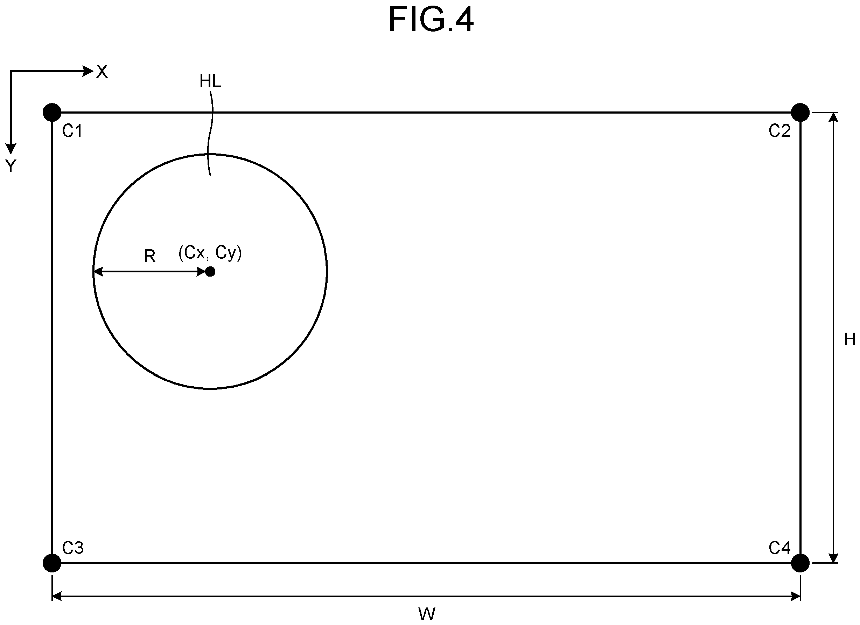

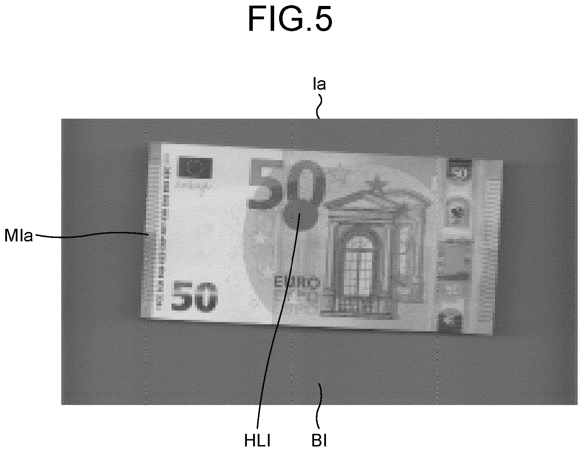

FIG. 4 and FIG. 5 are diagrams illustrating an example of the hole processing in Example 1 according to the present disclosure. First, the processor 11 acquires the pixel values of the background image BI (hereinafter also referred to as "background pixel values") from the normalized image MOIb. Next, the processor 11 converts the pixel values of a circular region HL with a radius R whose center is at a center coordinate (Cx, Cy), into the background pixel values, as illustrated in FIG. 4. The center coordinate (Cx, Cy) and the radius R are designated by the operator of the banknote image processing system 1 using the input device 20. By converting the pixel values of the circular region HL with the radius R into the background pixel values, the hole processing is performed on the normal banknote image MOIa as the pseudo-damage processing for the normal banknote image MOIa. Thus, a processed image Ia including a damaged banknote image MIa with a hole HLI as illustrated in FIG. 5 is obtained.

<Cutting processing>

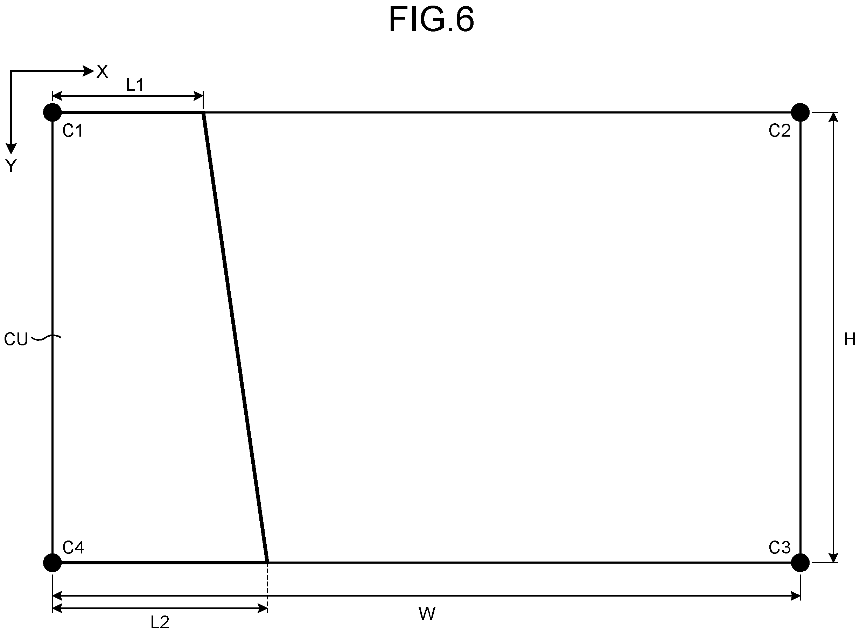

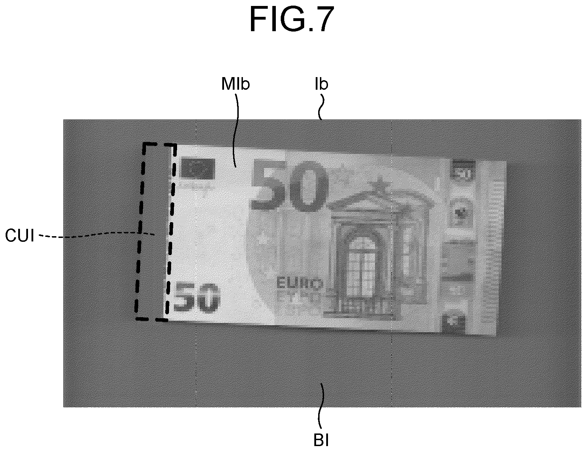

FIG. 6 and FIG. 7 are diagrams illustrating an example of the cutting processing in Example 1 according to the present disclosure. First, the processor 11 acquires the background pixel values from the normalized image MOIb. Next, the processor 11 calculates the x-coordinate, based on designated lengths L1 and L2 according to Equation (1), as illustrated in FIG. 6. The designated lengths L1 and L2 are designated by the operator of the banknote image processing system 1 using the input device 20. The processor 11 then converts the pixel values from the coordinate (0, y) to the x-coordinate expressed by Equation (1) into the background pixel values. Note that the processor 11 changes the y-coordinate in Equation (1) in the range of 0 to H - 1 line by line.

$$x = ((L2 - L1)/(H - 1)) \times y + L1 - 1 \qquad (1)$$

By converting the pixel values of a region CU with the designated lengths L1 and L2 and the height H into the background pixel values, the cutting processing is performed on the normal banknote image MOIa as the pseudo-damage processing for the normal banknote image MOIa, and as illustrated in FIG. 7, a processed image Ib including a damaged banknote image MIb in which a part CUI of the normal banknote image MOIa is cut from the normal banknote image MOIa is obtained.

<Tearing processing>

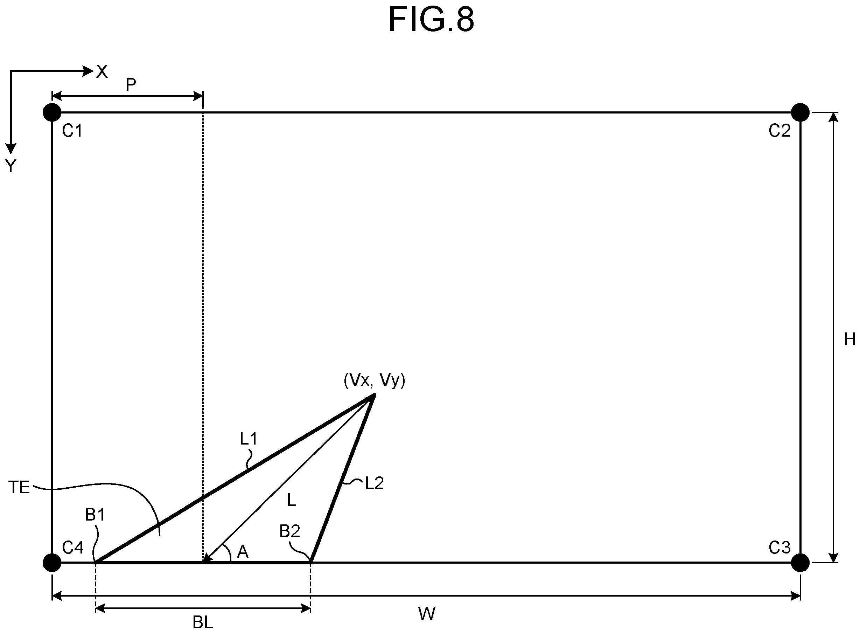

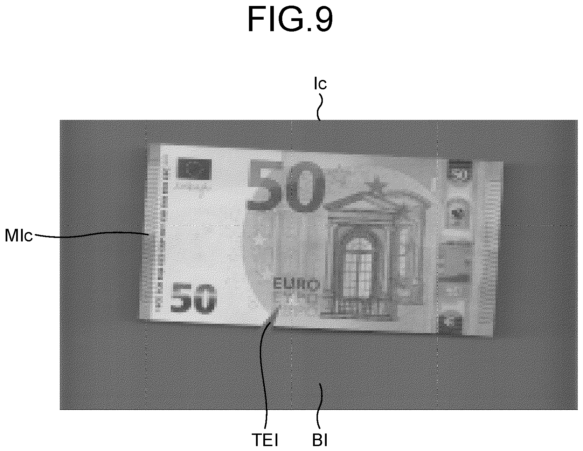

FIG. 8 and FIG. 9 are diagrams illustrating an example of the tearing processing in Example 1 according to the present disclosure. First, the processor 11 acquires the background pixel values from the normalized image MOIb. Next, the processor 11 calculates the vertex coordinate (Vx, Vy) on the basis of designated lengths P and L and an angle A according to Equations (2) and (3) as illustrated in FIG. 8. The processor 11 also calculates B1 and B2 coordinates on the basis of designated lengths P and BL according to Equations (4) and (5) as illustrated in FIG. 8. The designated lengths P, L, and BL and the angle A are designated by the operator of the banknote image processing system 1 using the input device 20.

$$Vx = P + L \times \sin(A) \qquad (2)$$

$$Vy = H - L \times \cos(A) \qquad (3)$$

$$B1 = P - (BL/2) - 1 \qquad (4)$$

$$B2 = P + (BL/2) - 1 \qquad (5)$$

The processor 11 then converts the pixel values from the x1-coordinate expressed by Equation (6) to the x2-coordinate expressed by Equation (7), starting from the vertex coordinate (Vx, Vy), into the background pixel values. Note that the processor 11 changes the y-coordinate in Equations (6) and (7) in the range of Vy to H - 1 line by line.

$$x1 = ((Vx - B1)/(H - Vy - 1)) \times (H - y - 1) + B1 \qquad (6)$$

$$x2 = ((Vx - B2)/(H - Vy - 1)) \times (H - y - 1) + B2 \qquad (7)$$

Thus, the pixel values in a region TE surrounded by the segments BL, L1, and L2 are converted into the background pixel values. Accordingly, the tearing processing is performed on the normal banknote image MOIa as the pseudo-damage processing for the normal banknote image MOIa and as illustrated in FIG. 9, a processed image Ic including a damaged banknote image MIc in which a tear TEI exists in a part of the normal banknote image MOIa is obtained.

<Corner folding processing>

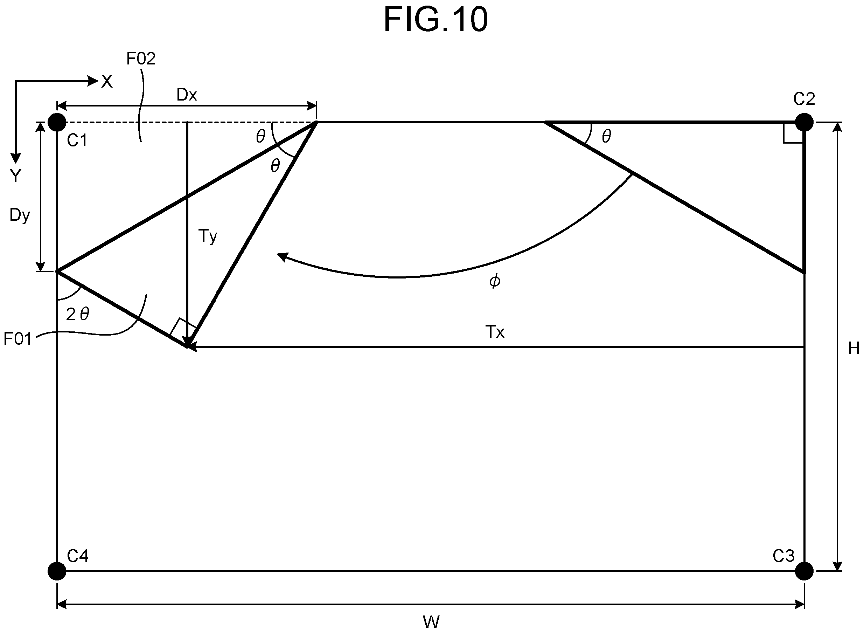

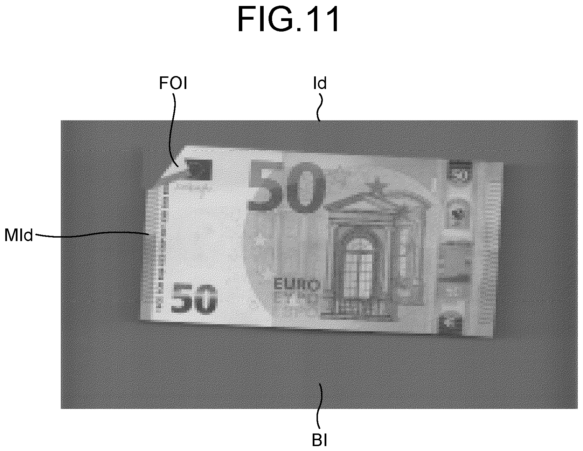

FIG. 10 and FIG. 11 are diagrams illustrating an example of the corner folding processing in Example 1 according to the present disclosure. First, the processor 11 acquires the background pixel values from the normalized image MOIb. Next, the processor 11 calculates an angle $\theta$, a rotation angle $\varphi$, an x-axis direction travel distance Tx, and a y-axis direction travel distance Ty, based on designated lengths Dx and Dy according to Equations (8), (9), (10) and (11), as illustrated in FIG. 10. The designated lengths Dx and Dy are designated by the operator of the banknote image processing system 1 using the input device 20.

$$\theta = \mathrm{atan}(Dy/Dx) \tag{8}$$

$$\varphi = \pi - 2\theta \tag{9}$$

$$Tx = Dx \times (1 - \cos(2\theta)) - W \tag{10}$$

$$Ty = Dy \times (1 + \cos(2\theta)) \tag{11}$$

The processor 11 also rotates the reverse image in the range from the coordinate (0, y) to the x-coordinate expressed by Equation (12) by the rotation angle $\varphi$ and moves the reverse image by the travel distances Tx and Ty before attaching the reverse image onto the obverse image. The processor 11 also converts the pixel values from the coordinate (0, y) to the x-coordinate expressed by Equation (13) into the background pixel values. Note that the processor 11 changes the y-coordinate in Equations (12) and (13) in the range of 0 to Dy line by line.

$$x = W - (Dx \times (Dy - y)/Dy) \tag{12}$$

$$x = Dx \times (Dy - y)/Dy \tag{13}$$

Thus, the obverse image in a region F01 is converted into the reverse image and the pixel values of a region F02 are converted into the background pixel values. Therefore, the corner folding processing is performed on the normal banknote image MOIa as the pseudo-damage processing for the normal banknote image MOIa and as illustrated in FIG. 11, a processed image Id including a damaged banknote image MId in which a corner folding FOI exists in a part of the normal banknote image MOIa is obtained.

<Staining processing>

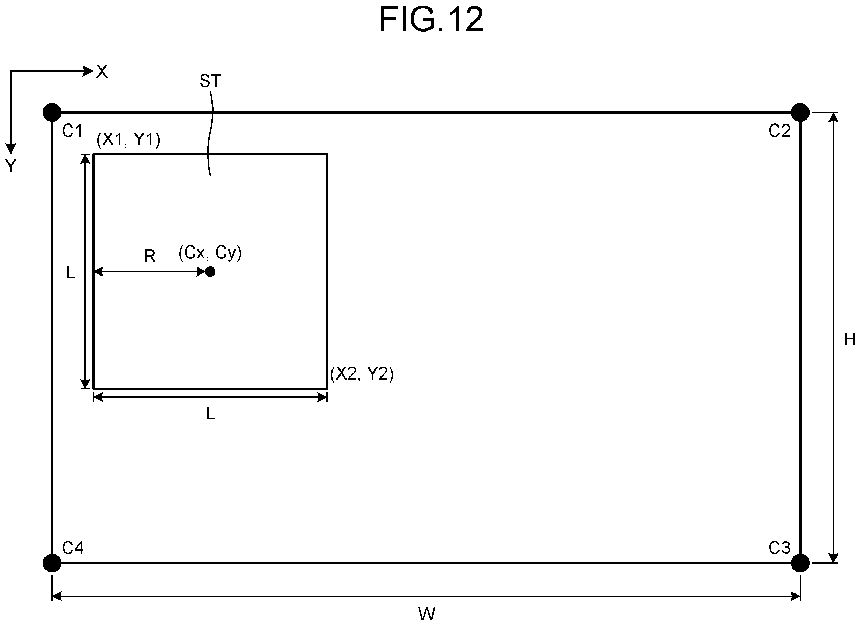

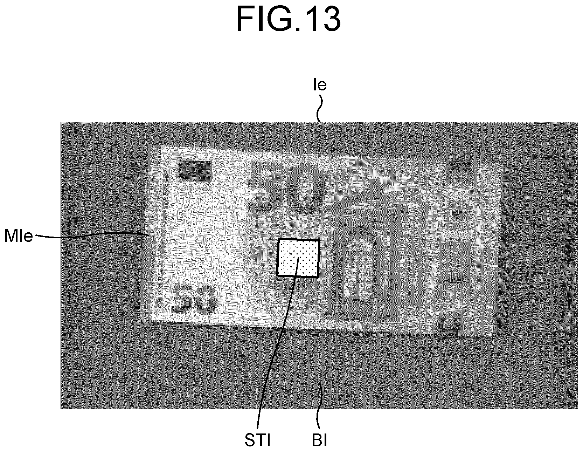

FIG. 12 and FIG. 13 are diagrams illustrating an example of the staining processing in Example 1 according to the present disclosure. First, the processor 11 calculates the coordinate (X1, Y1) and the coordinate (X2, Y2) on the basis of the center coordinate (Cx, Cy) and the designated length L according to Equations (14), (15), (16), (17), and (18) as illustrated in FIG. 12. The center coordinate (Cx, Cy) and the designated length L are designated by the operator of the banknote image processing system 1 using the input device 20.

$$R = L/2 \tag{14}$$

$$X1 = Cx - R \tag{15}$$

$$Y1 = Cy - R \tag{16}$$

$$X2 = Cx + R - 1 \tag{17}$$

$$Y2 = Cy + R - 1 \tag{18}$$

The processor 11 then reduces the luminance of the pixels in a region ST by multiplying the pixel values in the region ST from the coordinate (X1, Y1) to the coordinate (X2, Y2) by a predetermined gain value. As a result, the staining processing is performed on the normal banknote image MOIa as the pseudo-damage processing for the normal banknote image MOIa, and as illustrated in FIG. 13, a processed image Ie including a damaged banknote image MIe in which a stain STI exists in a part of the normal banknote image MOIa is obtained.

<Washing processing>

Laundry detergents contain fluorescent agents. Therefore, an image of a washed banknote will be brighter than an image of a normal, unwashed banknote.

In view of this, the processor 11 increases the luminance of all pixels in the normalized image MOIb by multiplying the pixel values of all pixels in the normalized image MOIb by a predetermined gain value.

As a result, the washing processing is performed on the normal banknote image MOIa as the pseudo-damage processing for the normal banknote image MOIa, and a processed image including a damaged banknote image with the increased brightness of the entire normal banknote image MOIa is obtained.

Example 1 has been described above.

Example 2

In Example 2, a case in which a tape is attached to a banknote is described.

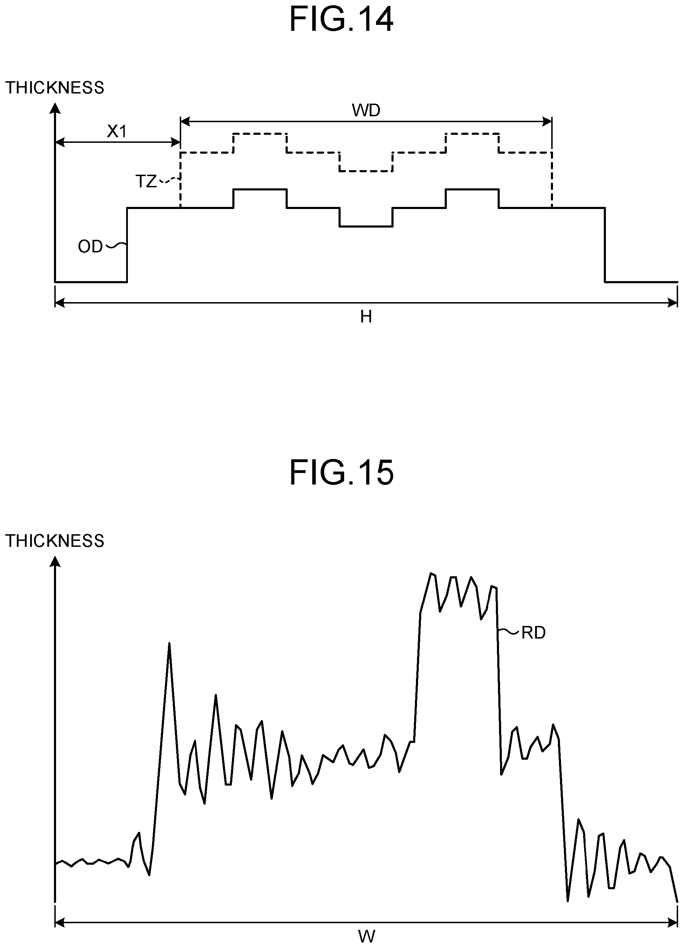

Banknote identification by banknote identification algorithms and banknote identification systems may be performed using not only the image of the banknote, but also the thickness of the banknote. Therefore, the normal banknote image is accompanied by data indicating the thickness of each part of the banknote (hereinafter also referred to as "thickness data"). FIG. 14 and FIG. 15 are diagrams illustrating one example of thickness data in Example 2 according to the present disclosure. FIG. 14 illustrates the thickness data in the height H direction, and FIG. 15 illustrates the thickness data in the width W direction.

In FIG. 14, data OD represents thickness data indicating the thickness of the normal banknote, and data TZ represents thickness data indicating the thickness of the tape attached to the banknote. In addition, "WD" in FIG. 14 represents the height of the tape. In other words, in FIG. 14, it is assumed that the tape with the thickness TZ and the height WD is attached to an X1 position in the height H direction on the normal banknote with the thickness OD. In FIG. 15, it is assumed that the tape is attached to the position a little to the right in the width W direction on the normal banknote.

The processor 11, for example, adds the thickness data TZ, which represents the thickness of the tape, to the thickness data OD, which represents the thickness of the normal banknote, based on the designated value X1. The designated value X1 is designated by the operator of the banknote image processing system 1 using the input device 20. The thickness data OD and TZ are stored in the storage unit 12 in advance.

The processor 11 adds the thickness data of the tape to the thickness data of the normal banknote in this manner, thereby generating the thickness data of the abnormal banknote with the tape attached.

Example 2 has been described above.

In the aforementioned manner, the banknote image processing device according to the present disclosure (banknote image processing device 10 according to Examples) includes the storage unit (storage unit 12 in Examples) and the processor (processor 11 in Examples). The storage unit stores the images of the normal banknotes therein. The processor performs the pseudo-damage processing, which imitates the damage caused on the normal banknote, on the image of the normal banknote.

For example, the processor performs the hole processing on the image of the normal banknote as the pseudo-damage processing.

For example, the processor performs the cutting processing on the image of the normal banknote as the pseudo-damage processing.

For example, the processor performs the tearing processing on the image of the normal banknote as the pseudo-damage processing.

For example, the processor performs the corner folding processing on the image of the normal banknote as the pseudo-damage processing.

For example, the processor performs the staining processing on the image of the normal banknote as the pseudo-damage processing.

For example, the processor performs the washing processing on the image of the normal banknote as the pseudo-damage processing.

In this manner, the damaged banknote images can be generated by simply processing the images of the normal banknotes without actually damaging the real banknotes; therefore, a large number of damaged banknote images can be easily obtained.

Explanation of Reference

| 1 | BANKNOTE IMAGE PROCESSING SYSTEM |

| 10 | BANKNOTE IMAGE PROCESSING DEVICE |

| 11 | PROCESSOR |

| 12 | STORAGE UNIT |

**Claims**

1. A banknote image processing device comprising:

   a storage unit that stores an image of a normal banknote therein; and
   a processor that performs pseudo-damage processing that imitates damage caused on the normal banknote, on the image.

2. The banknote image processing device according to claim 1, wherein the processor performs hole processing on the image as the damage processing.

3. The banknote image processing device according to claim 1, wherein the processor performs cutting processing on the image as the damage processing.

4. The banknote image processing device according to claim 1, wherein the processor performs tearing processing on the image as the damage processing.

5. The banknote image processing device according to claim 1, wherein the processor performs corner folding processing on the image as the damage processing.

6. The banknote image processing device according to claim 1, wherein the processor performs staining processing on the image as the damage processing.

7. The banknote image processing device according to claim 1, wherein the processor performs washing processing on the image as the damage processing.

8. The banknote image processing device according to claim 1, wherein the processor adds data representing a thickness of a tape to be attached to the normal banknote to data representing a thickness of the normal banknote.

9. A banknote image processing method comprising causing a processor to acquire an image of a normal banknote and perform pseudo-damage processing that imitates damage caused on the normal banknote, on the image.

# FIG.1

1

┌─ 10

BANKNOTE IMAGE
PROCESSING DEVICE

┌─ 11

PROCESSOR

┌─ 12

STORAGE
UNIT

┌─ 20

INPUT
DEVICE

┌─ 30

DISPLAY

# FIG.2

# FIG.3

MOIa

DETECT CORNER POINT

NORMALIZED
PROJECTION

MOIb

W

H

EP 4 485 407 A1

# FIG.4

EP 4 485 407 A1

# FIG.5

# FIG.6

EP 4 485 407 A1

# FIG.7

MIb   Ib

CUI

BI

FIG.8

# FIG.9

# FIG.10

EP 4 485 407 A1

# FIG.11

FOI       Id

MId

BI

FIG.12

# FIG.13

# FIG.14

THICKNESS

# FIG.15

THICKNESS

## INTERNATIONAL SEARCH REPORT

| International application No. |
|---|
| **PCT/JP2022/007415** |

### A. CLASSIFICATION OF SUBJECT MATTER

*G07D 7/00*(2016.01)i; *G07D 7/12*(2016.01)i; *G07D 7/164*(2016.01)i; *G07D 7/183*(2016.01)i; *G07D 7/185*(2016.01)i; *G07D 7/187*(2016.01)i; *G07D 7/189*(2016.01)i
FI: G07D7/00 J; G07D7/12; G07D7/187; G07D7/185; G07D7/183; G07D7/189; G07D7/164

According to International Patent Classification (IPC) or to both national classification and IPC

### B. FIELDS SEARCHED

Minimum documentation searched (classification system followed by classification symbols)
G07D1/00-13/00; G07F19/00; G07G1/00-5/00; G06T7/00-7/90

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | US 2016/0121370 A1 (GRG BANKING EQUIPMENT CO., LTD.) 05 May 2016 (2016-05-05) paragraphs [0006]-[0144], fig. 1-15 | 1-6, 9 |
| Y | | 7-8 |
| X | JP 2019-192012 A (TOSHIBA CORP.) 31 October 2019 (2019-10-31) paragraphs [0001]-[0040], fig. 1-4 | 1-6, 9 |
| Y | | 7-8 |
| X | WO 2019/116542 A1 (GLORY LTD.) 20 June 2019 (2019-06-20) abstract, paragraph [0060] | 1, 9 |
| Y | | 7-8 |
| Y | JP 2014-127163 A (GLORY LTD.) 07 July 2014 (2014-07-07) paragraph [0062] | 7 |
| Y | JP 2004-83172 A (HITACHI, LTD.) 18 March 2004 (2004-03-18) paragraph [0045] | 8 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **25 March 2022** | **12 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/007415**

| Patent document cited in search report | | | Publication date (day/month/year) | Patent family member(s) | | | Publication date (day/month/year) |
|---|---|---|---|---|---|---|---|
| US | 2016/0121370 | A1 | 05 May 2016 | WO | 2015/003486 | A1 | |
| | | | | EP | 3021259 | A1 | |
| | | | | CN | 103324946 | A | |
| JP | 2019-192012 | A | 31 October 2019 | (Family: none) | | | |
| WO | 2019/116542 | A1 | 20 June 2019 | EP | 3726486 | A1 | |
| | | | | abstract, paragraph [0060] | | | |
| JP | 2014-127163 | A | 07 July 2014 | US | 2015/0178692 | A1 | |
| | | | | paragraph [0255] | | | |
| | | | | WO | 2013/137012 | A1 | |
| | | | | EP | 2827306 | A1 | |
| JP | 2004-83172 | A | 18 March 2004 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011258029 A